(19) Europäisches Patentamt / European Patent Office / Office européen des brevets

(11) **EP 3 612 860 B1**

(12) **EUROPÄISCHE PATENTSCHRIFT**

(45) Veröffentlichungstag und Bekanntmachung des Hinweises auf die Patenterteilung:
**01.06.2022  Patentblatt 2022/22**

(21) Anmeldenummer: **18714737.6**

(22) Anmeldetag: **20.03.2018**

(51) Internationale Patentklassifikation (IPC):
**G01S 7/481** (2006.01)   **G01S 7/4911** (2020.01)
**G01S 7/4912** (2020.01)   **G01S 17/34** (2020.01)
**G01S 17/58** (2006.01)   **G01S 17/95** (2006.01)

(52) Gemeinsame Patentklassifikation (CPC):
**G01S 17/95; G01S 7/4818; G01S 7/4911;
G01S 7/4917; G01S 17/34; G01S 17/58;
Y02A 90/10**

(86) Internationale Anmeldenummer:
**PCT/EP2018/057050**

(87) Internationale Veröffentlichungsnummer:
**WO 2018/172369 (27.09.2018 Gazette 2018/39)**

(54) **LIDAR-MESSVORRICHTUNG**

LIDAR MEASURING DEVICE

DISPOSITIF DE MESURE LIDAR

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **22.03.2017   DE 102017106226**

(43) Veröffentlichungstag der Anmeldung:
**26.02.2020   Patentblatt 2020/09**

(73) Patentinhaber: **METEK Meteorologische
Messtechnik GmbH
25337 Elmshorn (DE)**

(72) Erfinder:
• **PETERS, Gerhard
22547 Hamburg (DE)**
• **BRINKMEYER, Ernst
21244 Buchholz (DE)**
• **BOLLIG, Christoph
37085 Göttingen (DE)**

(74) Vertreter: **Heinemeyer, Karsten
AdvInno Patent-u. Rechtsanwaltspart. mbB
Heinemeyer & Joachim
Sandstrasse 17-23
23552 Lübeck (DE)**

(56) Entgegenhaltungen:
**EP-A1- 2 730 947**

• **KAKUMA SEIICHI: "Frequency-modulated
continuous-wave laser radar using dual
vertical-cavity surface-emitting laser diodes for
real-time measurements of distance and radial
velocity", OPTICAL REVIEW, Bd. 24, Nr. 1, 3.
Dezember 2016 (2016-12-03), Seiten 39-46,
XP036152994, ISSN: 1340-6000, DOI:
10.1007/S10043-016-0294-7 [gefunden am
2016-12-03]**
• **MITCHELL, PH. ET AL.: "Development of a High
Speed Wideband Frequency Tunable Infra-Red
Laser Source for Real Time Wind Turbine Array
Sensing Applications", PROC. OF SPIE, Bd. 8069,
2011, Seiten 806907-1-806907-1, XP040560240,**

**Beschreibung**

Die Erfindung betrifft eine LIDAR-Messvorrichtung sowie ein Verfahren zur Ermittlung der Geschwindigkeit von Teilchen in einem Messvolumen. Mithilfe der beschriebenen Vorrichtung sowie dem Verfahren wird die Messung einer Windgeschwindigkeit in einem entfernten Messvolumen mit einer schmalbandigen Dauerstrich-Laserlichtquelle realisiert. Das von der Dauerstrich-Laserlichtquelle ausgesendet Licht wird in einen Messzweig und einen Referenzzweig eingekoppelt, wobei wenigstens ein Teil des in den Messzweig eingekoppelten Lichts wenigstens teilweise über eine Sendeeinrichtung derart in Richtung auf das Messvolumen ausgestrahlt wird, dass das ausgestrahlte Licht zumindest teilweise von den Teilchen im Messvolumen gestreut und/oder reflektiert wird, sodass wenigstens ein Teil des gestreuten und/oder reflektierten Lichts von einer Empfangseinrichtung empfangen wird. Dieses empfangene gestreute bzw. reflektierte Licht wird schließlich mit dem den Referenzzweig verlassenden Licht kohärent überlagert und die hieraus resultierende Lichtstrahlung auf einen Detektor zur Erzeugung eines für die resultierende Lichtstrahlung charakteristischen Detektorsignals gelenkt. In einer Auswerteeinheit wird unter Berücksichtigung des Detektorsignals die Geschwindigkeit der Teilchen im Messvolumen ermittelt.

Generell sind seit vielen Jahren bodengebundene Messverfahren zur Bestimmung der Windgeschwindigkeit und der Windrichtung für unterschiedliche Höhenbereiche der Atmosphäre, beispielsweise zur Überwachung von industriellen Schadstoff-Emittenten, für die Wettervorhersage sowie für die Atmosphären- und Klimaforschung, bekannt. In diesem Zusammenhang werden etwa sogenannte SODAR-Messsysteme für Windmessungen eingesetzt, wobei diese den Doppler-Effekt bei Schallwellen, die aus der Atmosphäre zurückgestreut werden, nutzen. Aufgrund der immer stärker an Bedeutung gewinnenden Windkraftnutzung in den letzten Jahren hat sich für derartige Messverfahren zur Messung der Windgeschwindigkeit und -richtung in von der eigentlichen Messeinrichtung entfernten Bereichen ein neues bedeutsames Anwendungsgebiet aufgetan. Neben den bekannten SODAR-Systemen werden in letzter Zeit sogenannte LIDAR-Messsysteme, bei denen Licht anstelle von Schall genutzt wird und die dem SODAR teilweise überlegen sind, für derartige Messungen verwendet.

LI DAR (Light detection and ranging) ist eine dem Radar verwandte Methode zur optischen Abstands- und Geschwindigkeitsmessung sowie zur Vermessung atmosphärischer Parameter. LIDAR-Systeme zur Atmosphärenmessung senden Laserstrahlung aus und detektieren das aus der Atmosphäre zurückgestreute Licht. Aus der Lichtlaufzeit der Signale wird die Entfernung zum Ort der Streuung berechnet. Insbesondere Wolken und Staubteilchen in der Luft streuen das Laserlicht und ermöglichen eine hochauflösende Selektion und Entfernungsmessung von Wolken und Aerosolschichten.

Ferner ist es mit LIDAR-Messsystemen möglich, über die Vermessung von Licht, das an von Wind bewegten Partikeln gestreut bzw. reflektiert wird, die an einem von der Messvorrichtung entfernten Ort herrschende Windgeschwindigkeit zu ermitteln. Diese Art der Messung kann insbesondere dafür ausgenutzt werden, um die vor einer Windkraftanlage herrschende Windgeschwindigkeit in bis zu einigen 100 m Entfernung zu messen und auf Basis der gemessenen Windgeschwindigkeit regeltechnische Parameter der Windkraftanlage anzupassen. Hiermit soll einerseits eine möglichst effektive Nutzung einer Windkraftanlage und andererseits Überbelastungen der Anlage aufgrund besonderer Windereignisse sichergestellt werden. Auf diese Weise können beispielsweise bei extremen Windböen rechtzeitig Notfallmaßnahmen eingeleitet werden, um eine Beschädigung der Windkraftanlage weitgehend zu verhindern.

Die bekannten LIDAR-Messsysteme zur Bestimmung von Windgeschwindigkeiten beruhen auf der Detektion und Auswertung der durch die Streuung von Laserlicht an den mit dem Wind bewegten Partikeln bewirkten Doppler-Frequenzverschiebung des Streulichts im Vergleich zum ausgesendeten Licht (vgl.: C. Weitkamp, LIDAR-range-resolved optical remote sensing of the atmosphere, Springer 2005).

Üblicherweise wird die Doppler-Frequenzverschiebung interferometrisch durch Überlagerung des von der Messvorrichtung empfangenen Streulichts mit Licht, das von der Laser-lichtquelle über einen zweiten optischen Pfad innerhalb der Messvorrichtung eingekoppelt wird, bestimmt. Zu diesem Zweck werden bei den bekannten LIDAR-Messvorrichtungen hoch kohärente Laserlichtquellen verwendet, die Licht mit Kohärenzlängen von mehreren 100 m, bei dem die Bandbreite der Frequenz im Sub-MHz-Bereich liegt, emittieren.

Um die jeweils erforderlich bzw. gewünschte Ortsauflösung sicherzustellen, sind grundsätzlich zwei unterschiedliche Vorgehensweisen bekannt. Eine erste technische Variante sieht vor, Dauerstrich-Laserquellen zu verwenden, die mithilfe eines geeigneten optischen Systems, etwa einer Linse oder eines Teleskops, auf den jeweils gewünschten Zielbereich fokussiert werden. Eine entsprechende technische Lösung wird in der WO 2005/1142531 beschrieben. Sofern der gewünschte Focus-Bereich verändert werden soll, wird dies mithilfe mechanischer Elemente erreicht, die allerdings regelmäßig vergleichsweise aufwändig gestaltet und teuer sind. Darüber hinaus bergen derartige Verstellelemente vor allem im Langzeitbetrieb das Risiko zusätzlicher Störungen.

Eine zweite technische Variante zur Erzielung und Veränderung der gewünschten Ortauflösung beruht auf der Nutzung gepulster Laserquellen. Die Ortsbestimmung erfolgt in diesem Fall über eine Laufzeitmessung der Laserpulse. Auf diese Weise können mit einem Puls, dessen Pulsbreite die Ortsauflösung bestimmt, die für Pulse mit einer Breite von 200 ns beispielsweise 30 m beträgt, nacheinander mehrere Messbereiche durch das Messsystem vermessen werden. Hierbei können die einzelnen nacheinander vermessenen Messbereiche jeweils Teilabschnitte des insgesamt zu untersuchenden Messvolumens darstellen.

Aufgrund der jeweils nur für kurze Zeit erfolgenden Beleuchtung eines einzelnen Messbereichs durch einen Puls ergeben sich allerdings schlechte Signal-Rausch-Verhältnisse. Ferner ist die Frequenzauflösung und damit auch die Auflösung der Windgeschwindigkeit aufgrund der kurzen Pulsbreiten begrenzt.

Ausgehend von den vorbeschriebenen Messsystemen ist aus der WO 2014/072514 eine weitere technische Lösung zur Erfassung der Windgeschwindigkeit in einem entfernten Raumbereich bekannt, die eine Veränderung der Ortsauflösung mit alternativen technischen Maßnahmen erreicht. Wesentlich für diese technische Lösung ist, dass anstelle der üblicherweise eingesetzten Laserlichtquellen eine schmalbandige Lichtquelle eingesetzt wird, die mit einem definierten Phasenmuster moduliert wird. Zunächst wird aufgrund der Verwendung einer Dauerstrich-Laserquelle im Vergleich zu gepulsten LIDAR eine relativ niedrige Sendeleistung benötigt. Außerdem muss die räumliche Auflösung nicht wie bei einem Puls-LIDAR, gegen die Geschwindigkeitsauflösung abgewogen werden, sondern beide Parameter können unabhängig voneinander in weiten Grenzen gewählt werden. Im Vergleich zum fokussierten Dauerstrich-LIDAR (CW-LIDAR) bietet diese Lösung ferner den Vorteil, dass die räumliche Auflösung mit zunehmender Entfernung nicht gröber wird, sondern vielmehr unabhängig von der Entfernung ist.

Wesentliches Bauteil der beschriebenen LIDAR-Messvorrichtung ist ein Modulator, der beispielsweise auf dem elektrooptischen Effekt in einem geeigneten Material beruht und die gewünschte Phasenmodulation der Frequenz des von einer Laserdiode emittierten Lichts sicherstellt. Dieser Modulator stellt in Bezug auf die Messvorrichtung ein vergleichsweise teures Bauteil dar, das ferner eine geeignete Ansteuerung sowie Energieversorgung voraussetzt.

Problematisch an den bislang bekannten LIDAR-Messsystemen ist, dass eine Ortsauflösung entweder nur mit vergleichsweise großem Aufwand und teilweise störanfälligen Komponenten sichergestellt werden kann, oder aber vergleichsweise teure optoelektronische Bauelemente benötigt werden. Dies erschwert die Bereitstellung zuverlässiger und gleichzeitig wirtschaftlich interessanter LIDAR-Messvorrichtungen, insbesondere für die Windenergienutzung, erheblich. Des Weiteren ist es mit den bekannten LIDAR-Messvorrichtungen oftmals nicht auf zufriedenstellende Weise möglich, eine aufgrund unterschiedlicher Bewegungen der Teilchen im Messbereich verursachte positive von einer negativen Dopplerverschiebung zu unterscheiden. Oftmals müssen hierzu ergänzend zur LIDAR-Messvorrichtung weitere Messgeräte verwendet werden.

Des Weiteren beschreibt Seiichi Kakuma: " Frequency-modulated continuous-wave laser radar using dual vertical-cavity surface-emitting laser diodes for real-time measurements of distance and radial velocity" (XP036152994) ein "FMCW Laser Radar" zur Messung der Entfernung von Teilchen sowie der Radialgeschwindigkeit. Wesentlich an der beschriebenen Lösung ist, dass die Laser-Lichtquelle über zwei Oberflächenemitter (VCSEL) verfügt, deren Frequenz jeweils über einen Bereich von 850 GHz veränderbar ist, wobei während der Messung die Frequenz des einen Lasers linear erhöht und die Frequenz des anderen Lasers verringert wird. Zur Variation der Frequenzen werden hier die Injektionsströme synchron moduliert.

Philip Mitchell et al.: " Development of a High Speed Wideband Frequency Tunable Infra-Red Laser Source for Real Time Wind Turbine Array Sensing Applications" (XP040560240) offenbart j eine Laserlichtquelle für eine Bestimmung von Windgeschwindigkeiten, wobei ebenfalls durch eine Variation des Injektionsstroms eine Veränderung der Frequenz des emittierten Lichts herbeigeführt" werden kann.

Unter Berücksichtigung der aus dem Stand der Technik bekannten technischen Lösungen zur Erfassung der Geschwindigkeit sowie der Bewegungsrichtung von in einem entfernten Messvolumen befindlichen Teilchen mithilfe eines LIDAR-Messsystems und den zuvor erläuterten Problemen liegt der Erfindung die Aufgabe zu Grunde, ein LIDAR-Messsystem derart weiterzubilden, das mithilfe eines vergleichsweise einfachen Aufbaus eine hochgenaue Geschwindigkeitsmessung von im entfernten Messbereich bewegten Teilchen möglich ist. Die anzugebende technische Lösung soll hierbei vor allem eine vergleichsweise einfache Einstellung sowie Verstellung der Ortsauflösung ermöglichen. Ferner soll sichergestellt werden, dass auch eine Bewegungsrichtung der Teilchen im Messbereich mit einfachen Mitteln, insbesondere ohne dass zusätzliche Messeinrichtungen bzw. komplexe Komponenten zwingend benötigt werden, zuverlässig bestimmbar ist.

Die vorstehend genannte Aufgabe wird mit einer Vorrichtung gemäß Anspruch 1 sowie einem Verfahren nach Anspruch 14 4-3- gelöst. Besonders geeignete Verwendungen der Erfindung sind in den Ansprüchen 12 und 13 11 und 12 angegeben. Vorteilhafte Ausführungsformen der Erfindung sind Gegenstand der abhängigen Ansprüche und werden in der folgenden Beschreibung unter teilweiser Bezugnahme auf die Ausführungsbeispiele näher erläutert.

Die Erfindung basiert auf einer LIDAR-Messvorrichtung zur Ermittlung der Geschwindigkeit von Teilchen in einem Messvolumen mit einer schmalbandigen Dauerstrich-Laser-lichtquelle, die Licht aussendet, das in seiner optischen Frequenz moduliert wird und dann in einen Messzweig und in einen Referenzzweig eingekoppelt wird. Das in den Messzweig eingekoppelte Licht wird wenigstens teilweise über eine Sendeeinrichtung derart in Richtung auf das Messvolumen ausgestrahlt, dass das ausgestrahlte Licht zumindest teilweise von den Teilchen im Messvolumen gestreut und/oder reflektiert wird, sodass wenigstens ein Teil des gestreuten und/oder reflektierten Lichts von einer Empfangseinrichtung empfangen wird. Im Weiteren wird das empfangene Licht mit dem den Referenzzweig verlassenden Licht kohärent überlagert und die hieraus resultierende Lichtstrahlung auf einen Detektor zur Erzeugung eines für die resultierende Lichtstrahlung charakteristischen Detektorsignals gelenkt. In einer Auswerteeinheit wird unter Berücksichtigung des Detektorsignals schließlich die Geschwindigkeit der Teilchen in den einzelnen Messbereichen des Messvolumens ermittelt. Mit

Bio Erfindung aoiohnot oioh dadurch einer Steuereinrichtung wird die Frequenz des von der Laserlichtquelle emittierten Lichts in vorbestimmter Weise variiertwiMund in der Auswerteeinheit wird zur Berechnung der Geschwindigkeit der Teilchen in den einzelnen Messbereichen des Messvolumens eine Spektralanalyse des Detektorsignals unter Berücksichtigung der vorgegebenen Frequnzveränderung bzw. Frequenzmodulation vorgenommen. wird. In Bezug auf die Beschreibung der Erfindung sind die Ausdrücke Frequenzmodulation bzw. Frequenzänderung als gleichbedeutend zu verstehen.

Bei der Auswertung der empfangenen Strahlung wird jeweils eine Doppler-Frequenzverschiebung zwischen der in den jeweiligen Messbereich eintretenden Strahlung und der empfangenen, gestreuten bzw. reflektierten Strahlung ermittelt und ausgewertet. Wesentlich für die Erfindung ist, dass im Gegensatz zu den bekannten technischen Lösungen die Frequenz des von der Laser-Lichtquelle emittierten Lichtes verändert bzw. moduliert wird. Aufgrund der Modulation der Frequenz mit Hilfe einer bekannten Funktion ist es möglich, die Ortsauflösung zu wählen und die Entfernung zwischen der Messvorrichtung und dem jeweils zu vermessenden Messbereich mit den darin enthaltenen Teilchen gezielt festzulegen.

Dies wird dadurch erreicht, dass aufgrund der Änderung der Frequenz des emittierten Lichts eine spektrale Verbreiterung und Verformung des zumindest weitgehend monochromatischen Lichts erreicht wird, wobei die Bandbreite die Kohärenzlänge bestimmt. Daher ist es möglich, mit derselben Laserlichtquelle verschiedene Kohärenzlängen und damit Ortsauflösungen zu realisieren. Als Laserlichtquelle wird eine schmalbandige Laser-lichtquelle verwendet, die vorzugsweise Licht mit einer Bandbreite, die kleiner als 1 MHz, bevorzugt kleiner als 100 kHz, besonders bevorzugt kleiner als 10 kHz ist. Die Messvorrichtung enthält vorzugsweise einen optischen Verstärker, der sich hinter der Laserquelle vor der Aufteilung in Mess- und Referenzzweig oder im Messzweig befinden kann.

Auf vorteilhafte Weise wird die Stromversorgung der Laserlichtquelle direkt moduliert, was letztendlich zu einer Variation der Frequenz der emittierten Lichtstrahlung und damit des Leistungsdichtespektrums führt. Aufgrund der verwendeten technischen Lösung, also der Frequenzmodulation des emittierten Lichtes kann ohne Einsatz vergleichsweise teurer Bauelemente eine hochgenaue Messung der Geschwindigkeit von den in einem entfernt gelegenen Messvolumen bewegten Teilchen realisiert werden.

Gemäß einer speziellen Ausführungsform der Erfindung ist die Laserlichtquelle als Laserdiode ausgeführt, die zumindest annähernd monochromatisches Licht emittiert. Auf bevorzugte Weise wird hierbei der Injektionsstrom der Laserdiode mithilfe einer geeignet ausgeführten Steuereinrichtung bzw. mithilfe des durch die Steuereinrichtung erzeugten Steuersignals variiert. Diese Variation des Versorgungsstroms führt einerseits zu einer üblicherweise. unwesentlichen Veränderung der Ausgangsleistung und andererseits zu einer gewünschten Variation der optischen Frequenz bzw. Wellenlänge des emittierten Lichts.

Auf diese Weise ist es beispielsweise bei einem DFB-Laser, der Licht in einem Wellenlängenbereich von 1530 bis 1570 nm, bevorzugt von 1550 nm, emittiert, möglich, eine Änderung der optischen Frequenz pro Injektionsstromänderung im Bereich von 0,5 bis 1 GHz/mA zu erzielen. Derartige Laser haben allerdings gewöhnlich eine Linienbreite von 1 ... 3 MHz, die für die beschriebene Anwendung zumindest nicht besonders gut geeignet ist. Sofern kleinere Linienbreiten, beispielsweise von 50-100 kHz benötigt werden, können auf vorteilhafte Weise sogenannte extended cavity laser (ECLs) verwendet werden, die über einen Tuning-Koeffizienten verfügen, der größer als 0,1 GHz/mA ist.

Anstatt die vorgesehene Frequenzmodulation durch eine Modulation des Injektionsstroms zu implementieren, können auch spezielle Laserdioden mit Frequenz-Abstimmbereichen und gesonderten Tuning-Elektroden eingesetzt werden.

In einer besonderen Weiterbildung ist zusätzlich zur Frequenzmodulation des von der Laserlichtquelle emittierten Lichtes die Auswerteeinheit derart ausgeführt, dass bei der Auswertung des generierten Detektorsignals einerseits die bekannte Frequenzfunktion und andererseits ein zusätzlicher Zeitverschiebungswert berücksichtigt wird. Der Zeitverschiebungswert wird derart gewählt, dass das Ergebnis der Funktion dem Detektorsignal entspricht, das sich bei Wahl eines Referenzzweiges ergeben würde, der gegenüber dem tatsächlichen Referenzzweig eine um den Zeitverschiebungswert geänderte Laufzeit und damit auch eine entsprechend geänderte optische Weglänge aufweist.

Diese Ausgestaltung beruht auf der Erkenntnis, dass das Detektorsignal nicht nur die für die Auswertung benötigte Information über Partikel in dem der tatsächlichen optischen Weglänge des Referenzzweiges und der Kohärenzlänge entsprechenden Messbereich, der nur einen Teil des insgesamt beleuchteten Bereichs darstellt, enthält, sondern auch jeweils bereits Informationen über Partikel in anderen beleuchteten Bereichen, die bei der momentan durchgeführten Messung nicht dem ausgewählten Messbereich bzw. der gewählten Ortsauflösung entsprechen.

Auf vorteilhafte Weise wird eine Dauerstrich-Laserlichtquelle verwendet, deren emittiertes Licht aufgrund der Frequenzmodulation eine Kohärenzlänge in einem Bereich von 0,1 bis 100 m aufweist. Besonders geeignet ist eine Kohärenzlänge in einem Bereich von 1 bis 100 m und ganz besonders geeignet in einem Bereich von 1 bis 50 m. Bei der Auswahl der Laserlichtquelle bzw. der Festlegung der Kohärenzlänge ist zu berücksichtigen, dass kohärente Interferenz am Detektor nur für Streulicht von Partikeln bzw. nur reflektiertes Licht von Objekten möglich ist, für die die optische Weglänge des Messzweiges innerhalb der Kohärenzlänge mit der optischen Weglänge des Referenzzweiges übereinstimmt. Aus diesem Grund wird durch eine stark begrenzte Kohärenzlänge eine hohe und durch die Wahl der Kohärenzlänge einstellbare Ortsauflösung erzielt. Zur Detektoranordnung gelangendes Streulicht, das von außerhalb des Kohärenzbereiches befindlichen Partikel ausgeht, führt demgegenüber lediglich zu einem breitbandigen Untergrund im Detektorsignal, was zwar zu einer kleinen Verringerung des Signal-Rausch-Verhältnisses führen kann, die Ortsauflösung aber nicht beeinträchtigt. Sofern der Kohärenzbereich kleiner als die maximale Ausdehnung des Messvolumens ist, wird lediglich ein Teilabschnitt, nämlich der jeweilige Messbereich, vermessen, und durch Verschiebung des Kohärenzbereichs, beispielsweise mithilfe einer optional vorhandenen Einrichtung zur Änderung der optischen Weglänge des Referenzzweiges, die bevorzugt mit rechnerischen Mitteln erfolgt, kann eine durch dessen optische Länge, die Kohärenzlänge, bestimmte Ortsauflösung erreicht werden. Die Ortsauflösung ist in vorteilhafter Weise unabhängig von der Entfernung des jeweils untersuchten Messbereiches.

Die Erfindung zeichnet sich dadurch aus, dass die Steuereinrichtung derart ausgeführt ist, ausgeführt! dass die Variation der Frequenz des von der Laserlichtquelle emittierten Lichts auf der Grundlage eines von der Steuereinrichtung erzeugten Steuersignals erfolgt, das eeee- einem durch eine vorgegebene Frequenzfunktion verursachten Pseudo-Rauschsignal entspricht. Auf diese Weise ist es möglich, die Frequenz des emittierten Lichtes auf gewünschte Weise zu modulieren, und hierbei insbesondere das optische Leistungsdichtespektrum auf gewünschte Weise anzupassen. Da die jeweils in der Steuereinrichtung verwendete Frequenzfunktion bekannt ist, kann die jeweilige Laserlichtquelle zur Realisierung verschiedener Kohärenzlängen und damit verschiedener Ortsauflösungen verwendet werden.

In einer besonderen Weiterbildung der Erfindung wird die Frequenz des von der Dauerstrich-Lichtquelle emittierten Lichtes so variiert, dass es einen zeitlinearen Anteil aufweist, letzterer beispielsweise erzeugt durch einen annähernd zeitlinearen Anteil im Laserdioden-Injektionsstrom. Dies kann mit dem oben beschriebenen Pseudo-Rauschverlauf kombiniert werden.

Diese Maßnahme ermöglicht auf bevorzugte Weise eine Vorzeichenerkennung bei der durch den Doppler-Effekt verursachten Frequenzverschiebung zwischen der Frequenz des ausgesandten und des empfangenen Lichts.

Das aus dem empfangenen gestreuten bzw. reflektierten Licht abgeleitete Signal enthält nicht die Information über die Frequenz des Lichts, sondern über die Differenz gegenüber der Frequenz eines Referenzlichtes, das von der Laserlichtquelle über den Referenzzweig geleitet wurde. Aus dieser Differenz wird unter Berücksichtigung des Doppler-Effekts die Geschwindigkeit der im Messvolumen bewegten Teilchen abgeleitet. Im einfachsten Fall wird das Referenzlicht aus dem Sender abgezweigt und hat dann dieselbe Frequenz wie das ausgesendete Licht.

In diesem Zusammenhang ist allerdings zu berücksichtigen, dass die Frequenzdifferenz je nach Bewegungsrichtung der Teilchen im Messvolumen zum LIDAR hin oder vom LIDAR weg ein positives oder negatives Vorzeichen haben kann. Aufgrund der erfindungsgemäß vorgesehenen Modulation der Frequenz des von der Laserlichtquelle emittierten Lichtes ist es auf bevorzugte Weise denkbar, die Frequenz des Lichtes mit einem weiteren linear zeitabhängigen Signal zu überlagern, sodass sich auch die Sendefrequenz des auf das Messvolumen hin ausgesendeten Lichts linear ändert. Auf vorteilhafte Weise ist hierbei vorgesehen, dass eine Differenz zwischen der Sendefrequenz und einer Frequenz des von der Empfangseinrichtung empfangenen gestreuten und/oder reflektierten Lichts derart groß gewählt wird, dass sich trotz einer durch die Bewegung der Teilchen verursachten Dopplerverschiebung der Frequenz des empfangenen Lichts gegenüber der Sendefrequenz ein Vorzeichen der Differenz nicht ändert. Sobald die Differenz zwischen der Sendefrequenz und der Empfangsfrequenz auf geeignete Weise besonders groß gewählt wird, kann die Dopplerverschiebung das Vorzeichen der Differenz nicht mehr ändern und es ist Eindeutigkeit in Bezug auf die Bewegungsrichtung der Teilchen im Messvolumen gegeben.

Bei der oben beschriebenen Auslegung der linearen Frequenzmodulation kann die Frequenzauflösung in unerwünschter Weise verschlechtert werden. Dies kann durch entsprechende Begrenzung der Steilheit der linearen Frequenzmodulation vermieden werden. Das dann möglicherweise wechselnde Vorzeichen der Differenz zwischen der Sendefrequenz und der Empfangsfrequenz kann durch eine dreiecksförmige Frequenzmodulation und getrennte Analyse des auf- und absteigenden Asts erkannt werden. In einem Ast erscheint die Summe und in dem anderen Ast die Differenz aus Dopplerverschiebung und laufzeitbedingter Frequenzverschiebung.

In einer weiteren besonderen Ausführungsform der Erfindung wird die Frequenz des von der Dauerstrich-Laserlichtquelle emittierten Lichts linear auf- und abwärts verändert bzw. moduliert. Die sich ergebende Frequenzverschiebung des empfangenen Signals gegenüber dem Sendesignal hängt wiederum von der Entfernung des Messbereichs bzw. des Volumenbereichs, in dem die Streuung an den Teilchen stattfindet, und von der Dopplerverschiebung ab. Die Frequenzauflösung wird wie in dem oben beschriebenen Verfahren mit überlagerter stochastischer und linearer Frequenzmodulation durch die Steilheit der Modulation und die Ortsauflösung bestimmt. Die Ortsauflösung wird hier in bekannter Weise durch Fokussierung, insbesondere mit Hilfe geeignet verstellbarer optischer Elemente, erzeugt. Aufgrund der dreiecksförmigen Modulation des Sendesignals kann auf bevorzugte Weise bei der Auswertung der Differenzfrequenzen im auf- und absteigenden Ast wie oben beschrieben auch das Vorzeichen der Frequenzverschiebung ermittelt werden. Die Dreiecksmodulation stellt hierbei im Vergleich zu den bekannten Verfahren, die die Ermittlung der Windrichtung mit einem zusätzlichen Messgerät, insbesondere mit einer Windfahne, oder die Bestimmung des Entfernungsanteils auf der Grundlage einer gesonderten Messung vorsehen, eine besonders kostengünstige Methode dar, um eine Eindeutigkeit bei der Bestimmung der Bewegungsrichtung der Teilchen im Messvolumen zu erzielen. Ein weiterer Vorteil der dreiecksförmigen Modulation ist, dass durch Auswertung der Differenzfrequenzen im auf- und absteigenden Ast nicht nur die Dopplerverschiebung sondern auch die genaue effektive Entfernung des Fokus abgeleitet werden kann. Je nachdem, ob die Dopplerverschiebung einen Vorzeichenwechsel der Differenzfrequenzen bewirkt oder nicht, ist die Dopplerschiebung gleich der halben Differenz (Summe) der Differenzfrequenzen und die Entfernung des Fokus gleich ein Viertel der Lichtgeschwindigkeit multipliziert mit der Summe (Differenz) der Differenzfrequenzen. Welcher Fall vorliegt, ist leicht zu entscheiden, da die ungefähre Entfernung des Fokus bekannt ist.

Eine spezielle Weiterbildung der Erfindung zeichnet sich dadurch aus, dass im Messzweig ein optischer Schalter, beispielsweise ein akusto-optischer Modulator, eingesetzt wird. Die Pulslängen sollen dabei so gewählt werden, dass sie länger sind, als es der gewünschten Ortsauflösung entspricht, sodass die Ortsauflösung weiterhin durch die Frequenzmodulation der Laserquelle bestimmt ist. Bei dieser Betriebsart steht das Detektorsignal nicht mehr durchgängig zur Verfügung. Trotzdem ergeben sich in bestimmten Anwendungsfällen Vorteile, beispielsweise dann, wenn innere Reflexe aus dem Messaufbau nicht ausreichend unterdrückt werden können, wenn ein starker inkohärenter Untergrund aufgrund starker Streuer außerhalb des Messvolumens das Signal-Rauschverhältnis stark verschlechtern oder wenn spezielle Eigenschaften des optischen Verstärkers im Pulsbetrieb einen deutlichen Vorteil erwarten lassen. Der Vorteile eines erfindungsgemäß ausgeführten Messsystems mit gepulstem Laser besteht darin, dass längere Reichweiten im Vergleich zu einem ungepulsten Betrieb erzielbar sind, ohne die Einschränkung von normalen gepulsten Systemen hinsichtlich Ortsauflösung und Geschwindigkeitsauflösung.

Eine spezielle Weiterbildung der Erfindung zeichnet sich dadurch aus, dass das von der Laserlichtquelle emittierte Licht vor der Verzweigung von Mess- und Referenzzweig einem optischen Verstärker, insbesondere einem Erbium-Faserverstärker, zugeleitet wird. Ferner werden für die erfindungsgemäß ausgeführte Messvorrichtung vorzugsweise polarisationserhaltende Fasern verwendet. Sofern keine derartigen Fasern verwendet werden, ist es generell denkbar, insbesondere im Referenzzweig wenigstens ein das Licht polarisierendes Element, bevorzugt einen Polarisationsteller vorzusehen.

Eine erfindungsgemäß ausgeführte LIDAR-Messeinrichtung, wie sie zuvor beschrieben wird, ist besonders zur Erfassung Windgeschwindigkeit und/oder einer Windrichtung, die luvseitig einer Windkraftanlage herrscht, geeignet. In diesem Zusammenhang ist es weiterhin denkbar, dass eine entsprechende LIDAR-Messeinrichtung am Spinner einer Windkraftanlage montiert wird und so die Geschwindigkeit und Windrichtung des die Windkraftanlage anströmenden Windes bereits in ausreichender Entfernung detektiert werden kann, um einerseits einen effektiven Betrieb der Windkraftanlage zu ermöglichen und andererseits Beschädigungen der Windkraftanlage, beispielsweise durch plötzliche Windböen, vor allem durch Verstellung des Pitchs der Rotorblätter zur Reduzierung der Belastung oder durch Einleitung einer Notabschaltung, zu verhindern.

Im Weiteren betrifft die Erfindung auch ein Verfahren zur Ermittlung der Geschwindigkeit von Teilchen in einem Messvolumen, bei dem mit einer schmalbandigen Dauerstrich-Laserlichtquelle Licht ausgesendet und in einen Messzweig und einen Referenzzweig eingekoppelt wird. Das in den Messzweig eingekoppelte Licht wird wenigstens teilweise über eine Sendeeinrichtung derart in Richtung auf das Messvolumen ausgestrahlt, dass das ausgestrahlte Licht zumindest teilweise von den Teilchen im Messvolumen gestreut und/oder reflektiert wird. Zumindest ein Teil des gestreuten und/oder reflektierten Lichts wird von einer Empfangseinrichtung der LIDAR-Messeinrichtung empfangen, mit dem den Referenzzweig verlassenden Licht kohärent überlagert und die hieraus resultierende Lichtstrahlung auf einen Detektor zur Erzeugung eines für die resultierende Lichtstrahlung charakteristischen Detektorsignals gelenkt. In einer Auswerteeinheit wird schließlich unter Berücksichtigung des Detektorsignals die Geschwindigkeit der Teilchen im Messvolumen ermittelt. Mit

Meiner Steuereinrichtung wird eine Frequenz des von der Laserlichtquelle emittierten Lichts in vorbestimmter Weise variiertwW4und in der Auswerteeinheit wird zur Berechnung der Geschwindigkeit der Teilchen in den einzelnen Messbereichen des Messvolumen eine Spektralanalyse des Detektorsignals unter Berücksichtigung der vorgegebenen Frequenzmodulation vorgenommen.

Auf vorteilhafte Weise wird als Laserlichtquelle eine Laserdiode verwendet, deren Injektionsstrom auf der Grundlage eines geeigneten Steuersignals variiert wird.

Auf der Grundlage einer entsprechenden Variation der Frequenz des von der Laserdiode emittierten Lichtes ist es möglich, die Ortsauflösung der LIDAR-Messeinrichtung zu verändern, ohne dass eine andere Laserlichtquelle verwendet werden muss oder es hierfür einer mechanischen Verstellung bedarf.

Das erfindungsgemäß ausgeführte Verfahren zeichnet sich dadurch aus, gocohon dass die Variation der t-requenz des von der Laserlichtquelle emittierten Lichts auf der Grundlage eines von der Steuereinrichtung erzeugten Steuersignals erfolgt, das einem durch eine vorgegebene Frequenzfunktion gezielt verursachten z r Pseudo-Rauschsignal Rauoohoignoi entspricht.

Im Folgenden wird die Erfindung ohne Beschränkung des allgemeinen Erfindungsgedankens anhand von Ausführungsbeispielen unter Bezugnahme auf die Figuren näher erläutert. Dabei zeigen:

Figur 1: prinzipieller Aufbau einer erfindungsgemäß ausgeführten LIDAR-Messeinrichtung;
Figur 2: Verlauf des elektrischen Leistungsdichtespektrums in Abhängigkeit der Frequenz;
Figur 3: Verlauf einer modulierten Frequenz über einen Zeitabschnitt;
Figur 4: Verlauf des modulierten Injektorstroms über einen Zeitabschnitt.

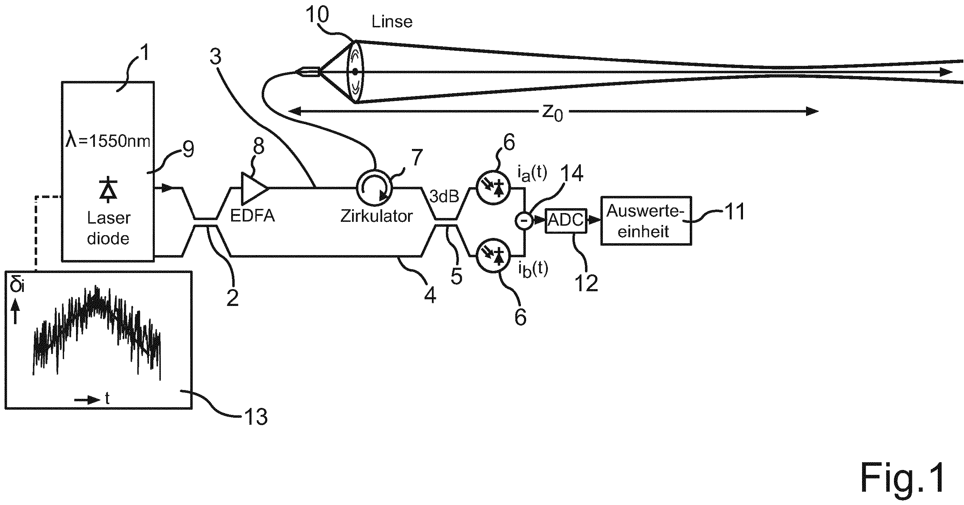

In Figur 1 ist eine erfindungsgemäß ausgeführte LIDAR-Messeinrichtung schematisch dargestellt. Die LIDAR-Messeinrichtung verfügt über eine Dauerstrich-Laserlichtquelle 1 mit einer Ausgangsleistung von 10 mW, die Licht mit einer Wellenlänge von 1550 nm emittiert. Das von der Laserlichtquelle 1 emittierte Licht wird mithilfe eines faseroptischen Kopplers, der die Funktion eines Strahlteilers 2 übernimmt, einerseits in einen zumindest teilweise faseroptisch definierten Messzweig 3 und andererseits in einen vollständig faseroptisch definierten Referenzzweig 4 eingekoppelt.

Bei den verwendeten optischen Fasern handelt es sich bevorzugt um Monomodefasern mit niedriger Dämpfung und einem Feldradius von vorteilhafterweise 5 $\mu$m. Bevorzugt werden polarisationserhaltende Fasern, sogenannte PM-Fasern, verwendet.

Am Ende des Messzweiges 3 und des Referenzzweiges 4 ist ein weiterer faseroptischer Koppler 5 zur Vereinigung des Lichtes aus dem Messzweig 3 und aus dem Referenzzweig 4 angeordnet. Das den Referenzzweig 4 verlassende Licht wird mit dem empfangenen Licht kohärent überlagert und die resultierende Lichtstrahlung auf den Detektor 6 geleitet. Gemäß diesem Ausführungsbeispiel verfügt der Detektor über zwei separate Fotodetektoren, die vorzugsweise als InGaAs-Detektoren ausgeführt sind. Mithilfe des Detektors 6 werden für die detektierte Strahlung charakteristische Signale erzeugt, wobei die beiden Signale in einem Subtraktionselement 14 zur Eliminierung von Störungen voneinander subtrahiert werden (balancierte Detektion). Das Differenzsignal wird schließlich über einen Analog-Digital-Umsetzer 12 einer Auswerteeinheit 11 zugeführt, in der das Differenzsignal zur Detektion der Anwesenheit und/oder Bewegung von Partikeln ausgewertet wird.

Falls keine PM-Fasern Verwendung finden, ist im Referenzzweig 4 ein einstellbarer faseroptischer Polarisationssteller und eine Umwegstrecke, beispielsweise in Form eines aufgewickelten Abschnitts der Faser, vorgesehen.

Der Messzweig weist nacheinander als Verstärker 8 einen Erbium-Faserverstärker mit einer bevorzugten Ausgangsleistung von 1 W und einen optischen Zirkulator 7 auf. Vom Zirkulator 7 wird das in den Messzweig 3 eingekoppelte Licht über einen Faserabschnitt einer Sende- und Empfangslinse 10 mit einer Brennweite von beispielsweise 250 mm zugeleitet und von hier aus in Richtung auf das zu vermessende Messvolumen bzw. den jeweiligen Messbereich fokussiert.

Die an Teilchen im Messvolumen gestreute bzw. reflektierte Strahlung gelangt zumindest teilweise wiederum in die Sende- und Empfangslinse 10 der LIDAR-Messeinrichtung. In dem hier dargestellten Ausführungsbeispiel sind die Sende- und die Empfangseinrichtung in der Sende- und Empfangslinse 10 kombiniert. Das hierüber empfangene gestreute und/oder reflektierte Licht wird anschließend über den Zirkulator 7 in den verbleibenden fasergebundenen Abschnitt des Messzweigs 3 eingekoppelt.

Die Dauerstrich-Laserlichtquelle 1 verfügt über eine Laserdiode 9 und ist an eine Steuereinrichtung 13 gekoppelt, die auf geeignete Weise den Injektionsstrom der Laserdiode 9 variiert, sodass auch die Frequenz des von der Laserdiode emittierten Lichtes verändert wird. In der Steuereinrichtung13 ist jeweils in Abhängigkeit der gewünschten Ortsauflösung eine Frequenzfunktion hinterlegt, sodass das von der Laserlichtquelle 1 emittierte Licht gegenüber dem üblicherweise von der Laserdiode 9 emittierten Licht durch die Modulation als Funktion der Frequenzfunktion im optischen Leistungsdichtespektrum verändert, insbesondere verbreitert und verformt, ist. Mit Hilfe der Steuereinrichtung 13 wird somit auf der Grundlage einer geeigneten, ein Pseudo-Rauschsignal definierenden Frequenzfunktion die Frequenz des emittierten Lichts verändert. Durch die Berücksichtigung verschiedener Zeitverschiebungswerte bei der Auswertung durch die Auswerteeinheit kann rein rechnerisch ohne Veränderung des beschriebenen Aufbaus die Detektion von Teilchen und deren Bewegung ortsaufgelöst für verschiedene, in unterschiedlichen Abständen von der Linse 10 entfernten Messbereichen separat vorgenommen werden.

Wesentlich für die Erfindung ist, dass die Frequenz des von einer Laserlichtquelle 1 emittierten Lichts gezielt variiert wird, sodass im Gegensatz zu den aus dem Stand der Technik bekannten technischen Lösungen kein Phasenmodulator für die Laserlichtquelle und im Weiteren kein akusto-optischer Modulator (AOM) benötigt wird.

Um eine geeignete Frequenzmodulation zu erreichen, sodass auf den gemäß dem Stand der Technik verwendeten Phasenmodulator verzichtet werden kann und trotzdem eine Modulation der Frequenz des emittierten Lichts erzielt wird, die die gleiche Wirkung, wie die bei bekannten Messsystemen zum Einsatz kommende Phasenmodulation $\vartheta(t)$ erzielt, muss die Momentanfrequenz der Laserdiode gemäß

$$f_{mom}(t) = \frac{1}{2\pi} \cdot \frac{d\,\Theta(t)}{dt}$$

verändert werden, wobei 8(t) dem Wert der jeweiligen Phase entspricht. Dafür ist eine Modulation des Injektionsstroms von

$$\delta i_{\mathrm{mod}}(t) = \frac{1}{\gamma_{tun}} f_{mom}(t) = \frac{1}{2\pi\gamma_{tun}} \cdot \frac{d\,\Theta(t)}{dt}$$

notwendig.

Dies führt allerdings zu einer unerwünschten Modulation der Laserausgangsleistung

$$\delta P_{0,\mathrm{mod}}(t) = \beta \cdot \delta i_{\mathrm{mod}}(t) = \frac{\beta}{2\pi\gamma_{tun}} \cdot \frac{d\,\Theta(t)}{dt}$$

wobei $\beta$ = dPo/di die sogenannte slope efficiency bezeichnet, für die als Richtwert 0,2 mW/mA angenommen werden kann.

Von der Laserausgangsleistung Po + $\delta P_{0,\mathrm{mod}}$ wird ein Teil ρ in den LO-Zweig eingekoppelt, wobei die modulationsbedingte Variation der Sendeleistung unerheblich ist:

$$P_{LO} + \delta P_{LO}(t) = \rho\left(P_0 + \delta P_{0,\mathrm{mod}}(t)\right) = \rho P_0 + \rho\beta \cdot \delta i_{\mathrm{mod}}(t) = \rho P_0 + \frac{\rho \cdot \beta}{2\pi\gamma_{tun}} \cdot \frac{d\,\Theta(t)}{dt}$$

Bei idealem balancierten Empfang macht sich die Variation der LO-Leistung nicht bemerkbar. Bei realem balancierten Empfang erhält man am Ausgang ein AC-Signal von

$$\delta i_{Det} = \varepsilon \cdot \mathcal{R} \cdot \delta P_{LO}(t) = \frac{\varepsilon \cdot \mathcal{R} \cdot P_{LO} \cdot \beta}{2\pi\gamma_{tun} \cdot P_0} \cdot \frac{d\,\Theta(t)}{dt}$$

mit der für den Detektor geltenden Photodioden-Ansprechempfindlichkeit "R= 1 $A/W$ . Zum Vergleich ergibt sich für ein (entzerrtes) Nutzsignal der Leistung P$_{signal}$ ein Detektorstrom mit dem Effektivwert

$$i_{signal,eff} = \mathcal{R} \cdot \frac{1}{\sqrt{2}} \sqrt{P_{signal} \cdot P_{LO}}$$

Für einen groben Vergleich wird der quadrierte Effektivwert von $f_{mom}(t)$ mit

$$\overline{f_{mom}^2(t)} = \frac{1}{2} f_{max}^2$$

abgeschätzt. Daraus folgt

$$\frac{\overline{(\delta i_{Det})^2}}{\overline{(i_{signal,eff})^2}} \cong \left(\frac{\varepsilon \mathcal{R} P_{LO}\,\beta \cdot f_{max}}{\gamma_{tun} \cdot P_0}\right)^2 \cdot \frac{1}{\mathcal{R}^2 \cdot P_{signal} \cdot P_{LO}} = \left(\frac{\varepsilon\,\beta \cdot f_{max}}{\gamma_{tun} \cdot P_0}\right)^2 \cdot \frac{P_{LO}}{P_{signal}}$$

Mit

c = 0.01; $\beta$ = 0.2 m W / mA, y$_{tun}$ = 100 MHz / mA, P$_0$ = 20 m W ·, $f_{maji}$ = ; P$_{LO}$ =100 $_c$cW ergibt sich daraus

$$\frac{\overline{\left(\delta i_{Det}\right)^2}}{\left(i_{signal,eff}\right)^2} \simeq \frac{10^{-14}\, W}{P_{signal}}$$

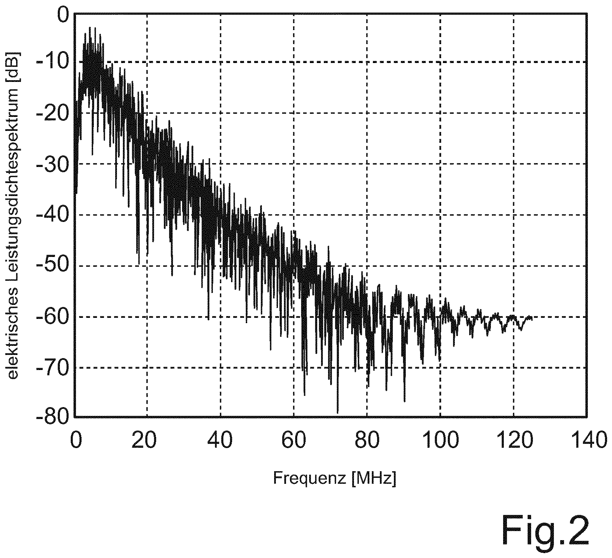

Dieser Vergleich macht deutlich, dass bei einem derartigen Effektivwert der modulationsbedingte Rauschuntergrund zu vernachlässigen ist. Zusätzlich ist zu berücksichtigen, dass das Signal schmalbandig, beispielsweise 100 kHz ist, während das modulationsbedingte Rauschen breitbandig ist und sich auf den tieffrequenten Frequenzbereich konzentriert, wie es in Figur 2 dargestellt ist.

Bei der aus dem Stand der Technik bekannten Phasenmodulation mit elektro-optischem Phasenmodulator wird die vorbestimmte Phase O(t) zur Entzerrung benutzt. Der Phasenmodulator wird mit einem zur Phase proportionalen Signal angesteuert. Hierbei kann es zu einem Skalierungsfehler kommen, so dass die dem optischen Signal aufgeprägte Phase $Ö(t) = z_{7\,...\,1}$, - O(t) ist. In diesem Zusammenhang ist bekannt, dass Werte von $\eta_{scale}$ = 0.9 ...1.1 unkritisch sind.

Bei der erfindungsgemäß vorgesehenen Direktmodulation der Laserlichtquelle mit Hilfe einer geeigneten Frequenzfunktion wird dem Injektionsstrom ein Modulationssignal gemäß

$$\delta i_{\mathrm{mod}}(t) = \frac{1}{\gamma_{tun}} f_{mom}(t) = \frac{1}{2\pi\gamma_{tun}} \cdot \frac{d\,\Theta(t)}{dt}$$

aufgeprägt. Sollte auch in diesem Fall ein Skalierungsfehler auftreten, für den Folgendes gilt

$$\delta \widetilde{i}_{\mathrm{mod}}(t) = \eta_{scale} \cdot \frac{1}{2\pi\gamma_{tun}} \cdot \frac{d\,\Theta(t)}{dt} = \frac{1}{2\pi\gamma_{tun}} \cdot \frac{d\left(\eta_{scale}\Theta(t)\right)}{dt}$$

so sind die Auswirkungen dieselben. Hiermit ergibt sich unmittelbar, dass die erfindungsgemäße LIDAR-Messvorrichtung, bei der eine Frequenzmodulation direkt an der Laser-lichtquelle vorgenommen wird, realisierbar ist, sodass auf den bislang verwendeten Phasenmodulator verzichtet werden kann.

Wie die obigen Ausführungen bereits gezeigt haben, ist es aus dem Stand der Technik bekannt, die von einer Laserlichtquelle emittierte optische Welle mit Hilfe eines Phasenmodulators einer vorbestimmten Phasenmodulation $\Theta(t)$ zu unterwerfen und die optische Frequenz in einem Interferometerarm durch einen akusto-optischen Modulator (AOM) um $f_{AOM}$ zu verschieben. Ein ruhendes Punktziel im Abstand z liefert dann ein Detektorsignal

$$u(t) \propto \exp\left\{ j\left[ 2\pi f_{AOM}t + \Theta\left(t - \frac{2z}{c}\right) - \Theta(t) \right] \right\} \qquad (1)$$

Bewegt sich das Ziel mit der Geschwindigkeit v in +z-Richtung, so tritt zusätzlich eine Dopplerverschiebung $f_{Doppler} = -\frac{2}{\lambda} v$ auf:

$$u(t) \propto \exp\left\{ j\left[ 2\pi f_{AOM}t + 2\pi f_{Doppler}\, t + \Theta\left(t - \frac{2z}{c}\right) - \Theta(t) \right] \right\} \qquad (2)$$

Dieses Signal kann zur Entzerrung mit der bekannten Funktion

$$h(t;z) \propto \exp\left\{ -j\left[ \Theta\left(t - \frac{2z}{c}\right) - \Theta(t) \right] \right\} \qquad (3)$$

multipliziert werden. Das für die Position z entzerrte Signal ist dann rein sinusförmig:

$$u_{ent}(t) = u(t) \cdot h(t;z) \propto \exp\left\{ j\left[2\pi f_{AOM} t + 2\pi f_{Doppler} t\right]\right\} \qquad (4)$$

Im Spektrum liefert es eine schmale Linie *bei $f_{AOM} + f_{Doppler}$*.

Wird diese Entzerrungsfunktion *h(t;z)* verwendet, befindet sich das Target jedoch am Orte $z_1 < z - \dfrac{\Delta z_{LC}}{2}$ oder $z_2 > z + \dfrac{\Delta z_{LC}}{2}$, so ist das elektrische Leistungsdichtespektrum breit. Die Breite hängt von $\Theta(t)$ ab. Ebenfalls hängt die Größe $\Delta z_{LC}$ vom Phasenmuster e(t)ab und wird als Ortsauflösung bezeichnet, bedingt durch die modulationsbedingte "low coherence". Entsprechende Phasenmuster z.B. für $\Delta z_{LC}$ = 5m, 10m, 15m können numerisch durch ein spezielles Iterationsverfahren gefunden werden. Ziele im Bereich

$$\left[ z - \frac{\Delta z_{LC}}{2}, \ z + \frac{\Delta z_{LC}}{2} \right] \qquad (5)$$

liefern also näherungsweise ein schmales Spektrum bei der Frequenz $f_{aom} + fD_{oppler}$ mit einer Breite $\delta f = \dfrac{q}{T}$, die im Wesentlichen durch die Messzeit T gegeben ist. Außerhalb dieses Bereiches erhält man ein breites Spektrum.

Gemäß einer weiteren Ausführungsform der Erfindung wird die Frequenz des von der Laserlichtquelle, insbesondere einer Laserdiode, emittierten Lichts auf zwei Arten verändert. In diesem Zusammenhang findet eine stochastische Modulation der Frequenz statt und außerdem wird die Frequenz des von der Laserlichtquelle emittierten Lichts zeitlinear verändert. Hierbei gilt:

$$f_{laser} = f_{laser,0} + \Gamma \cdot t \qquad (6)$$

so erhält man ein Detektorsignal gemäß

$$u(t) \propto \exp\left\{ j\left[2\pi\,\Gamma \cdot \frac{2z}{c} \cdot t + 2\pi f_{Doppler}\,t + \Theta\left(t - \frac{2z}{c}\right) - \Theta(t)\right]\right\} \qquad (7)$$

Im Unterschied zu Gl. (2) tritt hier nun an die Stelle der konstanten Frequenz $f_{AOM}$ die ortsabhängige, chirp-bedingte Frequenz $f_{chirp}(z) = \Gamma \cdot \dfrac{2z}{c}$. c

Wird mit *h(t;z)* gemäß eq.(3) entzerrt, so erhält man ein Ergebnis entsprechend eq.(4):

$$u_{ent}(t) = u(t) \cdot h(t;z) \propto \exp\left\{ j\left[2\pi\,\Gamma \cdot \frac{2z}{c} \cdot t + 2\pi f_{Doppler}\,t\right]\right\} \qquad (8)$$

Da die Chirp-Rate $\Gamma$ und der Ort z vorgegeben und damit bekannt sind, kann man daraus die *Dopplerfrequenz $f_{Doppler}$* bestimmen.

Ändert man nun wiederum den Ort des Targets, behält aber die Entzerrungsfunktion *h(t;z)* bei, so erhält man an den Rändern $z \pm \dfrac{\Delta z_{LC}}{2}$ der Ortsauflösung geänderte chirp-bedingte Frequenzen

$$f_{chirp}\left(z \pm \frac{\Delta z_{LC}}{2}\right) = \Gamma \cdot \frac{2z}{c} \pm \Gamma \cdot \frac{\Delta z_{LC}}{c} = f_{chirp}(z) \pm \frac{\delta f_{chirp}}{2} \qquad (9)$$

Innerhalb des Intervalls $\left[z - \dfrac{\Delta z_{LC}}{2},\ z + \dfrac{\Delta z_{LC}}{2}\right]$ ist damit die Frequenz im Spektrum um *5f*<sub>chirp</sub> verschmiert. Um die Dopplerauflösung im Vergleich zur aus dem Stand der Technik bekannten Lösung, die einen akusto-optischen Modulator (AOM) nutzt, nicht wesentlich zu verschlechtern, muss Folgendes gelten

$$\delta f_{chirp} \leq \delta f$$

(10)

Daraus folgt

$$\Gamma \cdot \frac{2\,\Delta z_{LC}}{c} \leq \delta f \qquad \Rightarrow \qquad \Gamma \leq \frac{c}{2\,\Delta z_{LC}} \cdot \delta f$$

(11)

Wählt man das größtmögliche $\Gamma = \dfrac{c}{2\,\Delta z_{LC}} \cdot \delta f\ \Gamma$ und führt man Messungen mit $\Gamma = 1\ \Gamma$ und $\Gamma = -1\ \Gamma|$ durch, was einer Dreiecks-Frequenzmodulation entspricht, so erhält man nach Entzerrung Spektrallinien bei den Frequenzen

$$f_+ = \left| |\Gamma| \cdot \frac{2z}{c} - f_{Doppler} \right| = \left| \frac{z}{\Delta z_{LC}} \cdot \delta f - f_{Doppler} \right| \qquad \text{und}$$

$$f_- = \left| -|\Gamma| \cdot \frac{2z}{c} - f_{Doppler} \right| = \left| \frac{z}{\Delta z_{LC}} \cdot \delta f + f_{Doppler} \right|$$

(12)

Für die Doppler-Frequenz gilt somit:

$$f_{Doppler} = - \frac{f_+^2 - f_-^2}{4 \cdot \dfrac{z}{\Delta z_{LC}} \cdot \delta f}$$

(13)

Ist eine der Frequenzen $f_{ic} < 5\,f$ und daher nicht bestimmbar, so gilt wieder, dass $f_{Doppler}$ auch aus der jeweils anderen bestimmt werden kann:
Ist

$$f_- > f_+ \text{ so ist } f_{Doppler} > 0 \quad \rightarrow \quad f_{Doppler} = f_- - \frac{z}{\Delta z_{LC}} \cdot \delta f$$

(14a)

Ist

$$f_- < f_+ \text{ so ist } f_{Doppler} < 0 \quad \rightarrow \quad f_{Doppler} = \frac{z}{\Delta z_{LC}} \cdot \delta f - f_+$$

(14b)

Im Folgenden sind einige konkrete Rechenbeispiele angegeben:

$$\Delta z_{LC} = 10\,m, \quad \delta f = 0.5\,MHz, \quad q = 2$$

$$\Rightarrow T = 4\,\mu s, \quad \Gamma = 7.5\cdot 10^{12}\,Hz/s = 7.5\,MHz/\mu s,$$

$$\Gamma\cdot T = 30\,MHz, \quad \Delta i_{tot} = \Gamma\cdot T/\gamma_{tun} = 37.5\,\mu A$$

$$(i)\; z = 10\,m, \quad f_{Doppler} = 10\,MHz \Rightarrow f_+ = 9.5\,MHz, \quad f_- = 10.5\,MHz \tag{15}$$

$$(ii)\; z = 50\,m, \quad f_{Doppler} = 10\,MHz \Rightarrow f_+ = 7.5\,MHz, \quad f_- = 12.5\,MHz$$

$$(iii)\; z = 100\,m, \quad f_{Doppler} = 10\,MHz \Rightarrow f_+ = 5\,MHz, \quad f_- = 15\,MHz$$

$$(iv)\; z = 20\,m, \quad f_{Doppler} = 1\,MHz \Rightarrow f_+ = 0\,MHz, \quad f_- = 2\,MHz$$

Für die Frequenzmodulation des Versorgungsstroms der Laserlichtquelle, insbesondere des Injektionsstroms einer Laserdiode, sind folgende Überlegungen von Bedeutung. Auf diese Weise können eine geeignete Frequenzmodulation und der lineare Frequenzchirp realisiert werden.

Mit einem vorgegebenen Phasenmuster $\Theta(t)$ zur Realisierung einer Ortsauflösung $\Delta z_{LC}$ und einem gewünschten linearen Frequenzchirp (Chirprate17) muss die Gesamt-Phasenmodulation der optischen Welle betragen

$$\Theta_{tot}(t) = \Theta(t) + \frac{1}{2}\,2\,\pi\,\Gamma\cdot t^2$$

und die zugehörige Frequenzmodulation und Strommodulation

$$f_{tot}(t) = \frac{1}{2\,\pi}\cdot\frac{d\,\Theta_{tot}(t)}{dt} = \frac{1}{2\,\pi}\cdot\frac{d\,\Theta(t)}{dt} + \Gamma\cdot t$$

$$\delta i_{mod}(t) = \frac{1}{\gamma_{tun}} f_{tot}(t) = \frac{1}{2\,\pi\,\gamma_{tun}}\cdot\frac{d\,\Theta(t)}{dt} + \frac{\Gamma}{\gamma_{tun}}\cdot t$$

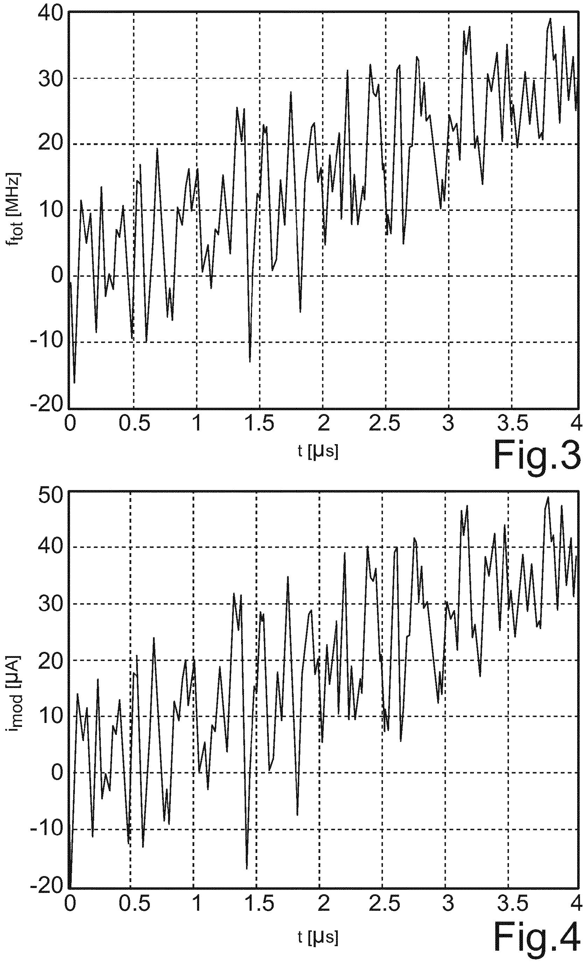

In den Figuren 3 und 4 sind jeweils beispielhaft Messungen, die die obigen Berechnungen belegen aufgezeigt. Figur 3 zeigt hierbei den Verlauf der Frequenz $f_{tot}$ in MHz und Figur 4 den modulierten Injektionsstrom $\delta i_{mod}$ in ljA jeweils über einen Zeitraum von 4 ljs ( $\Gamma$ = 7.5MHzlus ; $\gamma_{tun}$ = 800MHz/mA)

Bezugszeichenliste

1    Laserlichtquelle
2    Strahlteiler
3    Messzweig
4    Referenzzweig
5    faseroptischer Koppler
6    Detektor
7    Zirkulator
8    Verstärker
9    Laserdiode
10    Linse
11    Auswerteeinheit
12    Analog Digital Umsetzer
13    Steuereinheit
14    Subtraktionselement

**Patentansprüche**

1. LIDAR-Messvorrichtung zur Ermittlung der Geschwindigkeit von Teilchen in einem Messvolumen mit einer schmalbandigen Dauerstrich-Laserlichtquelle (1), die Licht aussendet, das in einen Messzweig (3) und einen Referenzzweig (4) einkoppelt wird, wobei das in den Messzweig (3) eingekoppelte Licht wenigstens teilweise über eine Sendeeinrichtung derart in Richtung auf das Messvolumen ausgestrahlt wird, dass das ausgestrahlte Licht zumindest teilweise von den Teilchen im Messvolumen gestreut und/oder reflektiert wird und dass wenigstens ein Teil des gestreuten und/oder reflektierten Lichts von einer Empfangseinrichtung empfangen, mit dem den Referenzzweig (4) verlassenden Licht kohärent überlagert und die hieraus resultierende Lichtstrahlung auf einen Detektor (6) zur Erzeugung eines für die resultierende Lichtstrahlung charakteristischen Detektorsignals gelenkt wird, wobei in einer Auswerteeinheit (11) unter Berücksichtigung des Detektorsignals die Geschwindigkeit der Teilchen im Messvolumen ermittelt wird,
wobei mit einer Steuereinrichtung (13) die Frequenz des von der Laserlichtquelle (1) emittierten Lichts variiert wird und die Auswerteeinheit (11) dazu eingerichtet ist, die Geschwindigkeit der Teilchen in wenigstens einem Messbereich des Messvolumens auf der Grundlage einer Spektralanalyse des Detektorsignals unter Berücksichtigung der vorgegebenen Frequenzmodulation zu ermitteln
**dadurch gekennzeichnet, dass** die Steuereinrichtung (13) ausgebildet ist, um ein Steuersignal zu erzeugen, das einem durch eine vorgegebene Frequenzfunktion verursachten Pseudo-Rauschsignal entspricht und das der Variation der Frequenz des von der Laserlichtquelle (1) emittierten Lichts zugrunde gelegt wird.

2. LIDAR-Messeinrichtung nach Anspruch 1,
**dadurch gekennzeichnet, dass** die Steuereinrichtung (13) eine Stromstärke des Versorgungstroms für die Laserlichtquelle (1) zur Variation der Frequenz des emittierten Lichts verändert.

3. LIDAR-Messeinrichtung nach Anspruch 1 oder 2,
**dadurch gekennzeichnet, dass** die Laserlichtquelle (1) eine Laserdiode (9) aufweist, deren Injektionsstrom zur Variation der Frequenz des emittierten Lichts verändert wird.

4. LI DAR-Messeinrichtung nach einem der Ansprüche 1 bis 3,
**dadurch gekennzeichnet, dass** die Frequenzmodulation dergestalt gewählt wird, dass die Laserlichtquelle (1) Licht mit einer Kohärenzlänge von 0,1 bis 100 m emittiert.

5. LIDAR-Messeinrichtung nach einem der Ansprüche 1 bis 4,
**dadurch gekennzeichnet, dass** die Laserlichtquelle (1) Licht mit einer Kohärenzlänge von 1 bis 50 m emittiert.

6. LI DAR-Messeinrichtung nach einem der Ansprüche 1 bis 5,
**dadurch gekennzeichnet, dass** die Steuereinheit (13) der Laserlichtquelle ein zusätzliches Signal aufprägt dergestalt, dass der Frequenz des emittierten Lichts ein zusätzlicher zeitlinearer Anteil hinzugefügt wird.

7. LIDAR-Messeinrichtung nach Anspruch 6,
**dadurch gekennzeichnet, dass** die zeitlineare Änderung der Frequenz des emittierten Lichts derart groß gewählt wird, dass sich trotz einer durch die Bewegung der Teilchen versursachten Dopplerverschiebung der Frequenz des empfangenen Lichts gegenüber der Sendefrequenz das Vorzeichen der Differenz nicht ändert.

8. LI DAR-Messeinrichtung nach einem der Ansprüche 1 bis 7,
**dadurch gekennzeichnet, dass** die Steuereinrichtung (13) die Stromstärke derart ändert, dass die Frequenz des von der Laser-Lichtquelle (1) emittierten Lichts linear auf- und absteigend variiert wird.

9. LI DAR-Messeinrichtung nach einem der Ansprüche 1 bis 8,
**dadurch gekennzeichnet, dass** die Steuereinheit (13) derart ausgeführt ist, dass das ausgesendete Licht gepulst wird, wobei die Pulslängen so gewählt werden, dass sie länger sind, als es der gewünschten Ortsauflösung entspricht, sodass die Ortsauflösung weiterhin durch die Frequenzmodulation der Laserlichtquelle bestimmt ist.

10. LIDAR-Messeinrichtung nach einem der Ansprüche 1 bis 9,
**dadurch gekennzeichnet, dass** im Messzweig (3) ein optischer Schalter, insbesondere ein akusto-optischer Modulator, angeordnet ist.

11. LI DAR-Messeinrichtung nach einem der Ansprüche 1 bis 9,

**dadurch gekennzeichnet, dass** im Referenzzweig (4) wenigstens ein das Licht polarisierende Element angeordnet ist.

12. Verwendung einer LIDAR-Messeinrichtung nach einem der Ansprüche 1 bis 11 zur Erfassung einer Windgeschwindigkeit und/oder einer Windrichtung luvseitig einer Windkraftanlage.

13. Verwendung einer LIDAR-Messeinrichtung nach einem der Ansprüche 1 bis 11 zur Erfassung einer Windgeschwindigkeit und/oder einer Windrichtung luvseitig einer Windkraftanlage, wobei die Messeinrichtung am Spinner der Windkraftanlage befestigt ist.

14. Verfahren zur Ermittlung der Geschwindigkeit von Teilchen in einem Messvolumen, bei dem mit einer schmalbandigen Dauerstrich-Laserlichtquelle (1) Licht ausgesendet und in einen Messzweig (3) und einen Referenzzweig(4) einkoppelt wird, bei dem das in den Messzweig (3) eingekoppelte Licht wenigstens teilweise über eine Sendeeinrichtung derart in Richtung auf das Messvolumen ausgestrahlt wird, dass das ausgestrahlte Licht zumindest teilweise von den Teilchen im Messvolumen gestreut und/oder reflektiert wird und dass wenigstens ein Teil des gestreuten und/oder reflektierten Lichts von einer Empfangseinrichtung empfangen, mit dem den Referenzzweig (4) verlassenden Licht kohärent überlagert und die hieraus resultierende Lichtstrahlung auf einen Detektor (6) zur Erzeugung eines für die resultierende Lichtstrahlung charakteristischen Detektorsignals gelenkt wird, und bei dem in einer Auswerteeinheit (11) unter Berücksichtigung des Detektorsignals die Geschwindigkeit der Teilchen im Messvolumen ermittelt wird,
wobei mit einer Steuereinrichtung (13) die Frequenz des von der Laserlichtquelle (1) emittierten Lichts variiert wird und in der Auswerteeinheit (11) zur Berechnung der Geschwindigkeit der Teilchen in wenigstens einem Messbereich des Messvolumens eine Spektralanalyse des Detektorsignals unter Berücksichtigung der vorgegebenen Frequenzmodulation vorgenommen wird, **dadurch gekennzeichnet, dass** die Variation der Frequenz des von der Laserlichtquelle (1) emittierten Lichts auf der Grundlage eines von der Steuereinrichtung (13) erzeugten Steuersignals erfolgt, das einem durch eine vorgegebene Frequenzfunktion verursachten Pseudo-Rauschsignal entspricht.

15. Verfahren nach Anspruch 14,
**dadurch gekennzeichnet, dass** die Variation der Frequenz des von der Laserlichtquelle (1) emittierten Lichts auf der Grundlage eines von der Steuereinrichtung (13) erzeugten Steuersignals erfolgt, das einen zeitlinearen Anteil enthält.

**Claims**

1. A LIDAR measuring device for determining the velocity of particles in a measuring volume with a narrow-band continuous-wave laser light source (1) emitting light, which is coupled into a measuring branch (3) and a reference branch (4), wherein the light coupled into the measuring branch (3) is at least partially emitted towards the measuring volume via a transmitting device in such way, that the emitted light is at least partially scattered and/or reflected by the particles in the measuring volume and that at least part of the scattered and/or reflected light is received by a receiving device, is coherently superimposed with the light exiting the reference branch (4), and the light radiation resulting herefrom is directed onto a detector (6) for generating a detector signal characteristic for the resulting light radiation, wherein the velocity of the particles in the measuring volume is determined in an analysis unit (11) considering the detector signal,
wherein the frequency of the light emitted by the laser light source (1) is varied with a control device (13) and the analysis unit (11) is configured to determine the velocity of the particles in at least one measuring range of the measuring volume on the basis of a spectral analysis of the detector signal considering the predetermined frequency modulation, **characterized in that** the control device (13) is designed to generate a control signal, which corresponds to a pseudo-noise signal caused by a predetermined function of frequency, and which is taken as the basis for the variation of the frequency of the light emitted by the laser light source (1).

2. The LIDAR measuring device according to claim 1,
**characterized in that** the control device (13) changes a current intensity of the supply current for the laser light source (1) in order to vary the frequency of the emitted light.

3. The LIDAR measuring device according to claim 1 or 2,
**characterized in that** the laser light source (1) has a laser diode (9), the injection current of which is changed in order to vary the frequency of the emitted light.

4. The LIDAR measuring device according to any one of claims 1 to 3,
**characterized in that** the frequency modulation is chosen such that the laser light source (1) emits light with a coherence length of 0.1 to 100 m.

5. The LIDAR measuring device according to any one of claims 1 to 4,
**characterized in that** the laser light source (1) emits light with a coherence length of 1 to 50 m.

6. The LIDAR measuring device according to any one of claims 1 to 5,
**characterized in that** the control unit (13) applies an additional signal to the laser light source, such that an additional temporally linear portion is added to the frequency of the emitted light.

7. The LIDAR measuring device according to claim 6,
**characterized in that** the temporally linear change of the frequency of the emitted light is chosen so great that, despite a Doppler shift of the frequency of the received light compared to the transmitting frequency caused by the movement of the particles, the sign of the difference does not change.

8. The LIDAR measuring device according to any one of claims 1 to 7,
**characterized in that** the control device (13) changes the current intensity such that the frequency of the light emitted by the laser light source (1) is varied in a linearly ascending and descending manner.

9. The LIDAR measuring device according to any one of claims 1 to 8,
**characterized in that** the control unit (13) is designed such that the emitted light is pulsed, wherein the pulse lengths are chosen such that they are longer than corresponding to the desired spatial resolution, so that the spatial resolution continues to be determined by the frequency modulation of the laser light source.

10. The LIDAR measuring device according to any one of claims 1 to 9,
**characterized in that** an optical switch, in particular an acousto-optical modulator, is arranged in the measuring branch (3).

11. The LIDAR measuring device according to any one of claims 1 to 9,
**characterized in that** at least one element polarizing the light is arranged in the reference branch (4).

12. A use of a LIDAR measuring device according to any one of claims 1 to 11 for detecting a wind velocity and/or a wind direction on the windward side of a wind power plant.

13. The use of a LIDAR measuring device according to any one of claims 1 to 11 for detecting a wind velocity and/or a wind direction on the windward side of a wind power plant, wherein the measuring device is attached to the spinner of the wind power plant.

14. A method for determining the velocity of particles in a measuring volume, in which light is emitted with a narrow-band continuous-wave laser light source (1) and coupled into a measuring branch (3) and a reference branch(4), in which the light coupled into the measuring branch (3) is at least partially emitted towards the measuring volume via a transmitting device in such way, that the emitted light is at least partially scattered and/or reflected by the particles in the measuring volume and that at least part of the scattered and/or reflected light is received by a receiving device, is coherently superimposed with the light exiting the reference branch (4), and the light radiation resulting herefrom is directed onto a detector (6) for generating a detector signal characteristic for the resulting light radiation, and in which the velocity of the particles in the measuring volume is determined in an analysis unit (11) considering the detector signal,
wherein the frequency of the light emitted by the laser light source (1) is varied with a control device (13), and a spectral analysis of the detector signal, considering the predetermined frequency modulation, is undertaken in the analysis unit (11) in order to calculate the velocity of the particles in at least one measuring range of the measuring volume, **characterized in that** the variation of the frequency of the light emitted by the laser light source (1) is undertaken on the basis of a control signal generated by the control device (13), which corresponds to a pseudo-noise signal caused by a predetermined function of frequency.

15. The method according to claim 14,
**characterized in that** the variation of the frequency of the light emitted by the laser light source (1) is undertaken on the basis of a control signal generated by the control device (13), which contains a temporally linear portion.

**Revendications**

1.  Dispositif de mesure LIDAR pour déterminer la vitesse des particules dans un volume de mesure avec une source de lumière laser à onde continue à bande étroite (1) qui émet de la lumière, dispositif qui est couplé dans une branche de mesure (3) et une branche de référence (4), la lumière couplée dans ladite branche de mesure (3) étant émise au moins partiellement par un dispositif d'émission en direction du volume de mesure de telle sorte que la lumière émise soit au moins partiellement diffusée et/ou réfléchie par les particules dans le volume de mesure et qu'au moins une partie de la lumière diffusée et/ou réfléchie soit reçue par un dispositif de réception, soit superposée de manière cohérente à la lumière quittant la branche de référence (4) et le rayonnement lumineux qui en résulte soit dirigé sur un détecteur (6) pour produire un signal du détecteur caractéristique du rayonnement lumineux résultant, la vitesse des particules dans le volume de mesure étant déterminée dans une unité d'évaluation (11) en tenant compte du signal du détecteur,
    la fréquence de la lumière émise par ladite source de lumière laser (1) étant variée à l'aide d'un dispositif de commande (13) et ladite unité d'évaluation (11) étant conçue pour déterminer la vitesse des particules dans au moins une zone de mesure du volume de mesure sur la base d'une analyse spectrale du signal du détecteur en tenant compte de la modulation de fréquence prédéfinie,
    **caractérisé en ce que** ledit dispositif de commande (13) est adapté pour générer un signal de commande qui correspond à un signal de pseudo-bruit provoqué par une fonction de fréquence prédéterminée et qui est basé sur la variation de la fréquence de la lumière émise par ladite source de lumière laser (1).

2.  Dispositif de mesure LIDAR selon la revendication 1,
    **caractérisé en ce que** ledit dispositif de commande (13) fait varier une intensité du courant d'alimentation de ladite source de lumière laser (1) pour faire varier la fréquence de la lumière émise.

3.  Dispositif de mesure LIDAR selon la revendication 1 ou 2,
    **caractérisé en ce que** ladite source de lumière laser (1) comprend une diode laser (9) dont le courant d'injection est modifié pour faire varier la fréquence de la lumière émise.

4.  Dispositif de mesure LIDAR selon l'une des revendications 1 à 3,
    **caractérisé en ce que** la modulation de fréquence est choisie de telle sorte que ladite source de lumière laser (1) émette de la lumière d'une longueur de cohérence de 0,1 à 100 m.

5.  Dispositif de mesure LIDAR selon l'une des revendications 1 à 4,
    **caractérisé en ce que** ladite source de lumière laser (1) émet une lumière d'une longueur de cohérence de 1 à 50 m.

6.  Dispositif de mesure LIDAR selon l'une des revendications 1 à 5,
    **caractérisé en ce que** ledit dispositif de commande (13) applique un signal supplémentaire à ladite source de lumière laser de telle sorte qu'une composante linéaire temporelle supplémentaire soit ajoutée à la fréquence de la lumière émise.

7.  Dispositif de mesure LIDAR selon la revendication 6,
    **caractérisé en ce que** la variation linéaire dans le temps de la fréquence de la lumière émise est choisie de manière à ce que le signe de la différence ne change pas malgré un décalage Doppler de la fréquence de la lumière reçue par rapport à la fréquence d'émission, provoqué par le mouvement des particules.

8.  Dispositif de mesure LIDAR selon l'une des revendications 1 à 7,
    **caractérisé en ce que** ledit dispositif de commande (13) fait varier l'intensité du courant de telle sorte que la fréquence de la lumière émise par ladite source de lumière laser (1) varie linéairement de manière croissante et décroissante.

9.  Dispositif de mesure LIDAR selon l'une des revendications 1 à 8,
    **caractérisé en ce que** ledit dispositif de commande (13) est conçue de telle sorte que la lumière émise est pulsée, les longueurs d'impulsion étant sélectionnées de manière à être plus longues que ce qui correspond à la résolution spatiale souhaitée, de sorte que la résolution spatiale est en outre déterminée par la modulation de fréquence de ladite source de lumière laser.

10. Dispositif de mesure LIDAR selon l'une des revendications 1 à 9,
    **caractérisé en ce qu'**un commutateur optique, en particulier un modulateur acousto-optique, est disposé dans ladite branche de mesure (3).

**11.** Dispositif de mesure LIDAR selon l'une des revendications 1 à 9,
**caractérisé en ce qu'**au moins un élément polarisant la lumière est disposé dans ladite branche de référence (4).

**12.** Utilisation d'un dispositif de mesure LIDAR selon l'une des revendications 1 à 11 pour la détection d'une vitesse de vent et/ou d'une direction de vent au vent d'une éolienne.

**13.** Utilisation d'un dispositif de mesure LIDAR selon l'une des revendications 1 à 11 pour détecter une vitesse de vent et/ou une direction de vent au vent d'une éolienne, le dispositif de mesure étant fixé au spinner de l'éolienne.

**14.** Procédé de détermination de la vitesse des particules dans un volume de mesure, dans lequel de la lumière est émise par une source de lumière laser à onde continue à bande étroite (1) et est couplée dans une branche de mesure (3) et une branche de référence (4), dans lequel la lumière couplée dans ladite branche de mesure (3) est émise au moins partiellement par l'intermédiaire d'un dispositif d'émission en direction du volume de mesure de telle sorte que la lumière émise soit au moins partiellement diffusée et/ou réfléchie par les particules dans le volume de mesure et qu'au moins une partie de la lumière diffusée et/ou réfléchie soit reçue par un dispositif de réception, soit superposée de manière cohérente à la lumière quittant la branche de référence (4) et le rayonnement lumineux qui en résulte soit dirigé sur un détecteur (6) pour produire un signal du détecteur caractéristique du rayonnement lumineux résultant, et dans lequel la vitesse des particules dans le volume de mesure est déterminée dans une unité d'évaluation (11) en tenant compte du signal du détecteur,
la fréquence de la lumière émise par ladite source de lumière laser (1) étant modifiée avec un dispositif de commande (13) et une analyse spectrale du signal du détecteur étant effectuée dans ladite unité d'évaluation (11) pour calculer la vitesse des particules dans au moins une zone de mesure du volume de mesure en tenant compte de la modulation de fréquence prédéfinie, **caractérisé en ce que** la variation de la fréquence de la lumière émise par ladite source de lumière laser (1) est effectuée sur la base d'un signal de commande généré par ledit dispositif de commande (13), qui correspond à un signal de pseudo-bruit provoqué par une fonction de fréquence prédéterminée.

**15.** Procédé selon la revendication 14,
**caractérisé en ce que** la variation de la fréquence de la lumière émise par ladite source de lumière laser (1) est effectuée sur la base d'un signal de commande généré par ledit dispositif de commande (13) et qui comprend une partie linéaire dans le temps.

Fig.1

EP 3 612 860 B1

Fig.2

Fig.3

Fig.4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 20051142531 A

- WO 2014072514 A

**In der Beschreibung aufgeführte Nicht-Patentliteratur**

- **C. WEITKAMP.** LIDAR-range-resolved optical remote sensing of the atmosphere. Springer, 2005

- **PHILIP MITCHELL et al.** *Development of a High Speed Wideband Frequency Tunable Infra-Red Laser Source for Real Time Wind Turbine Array Sensing Applications*